# EUROPÄISCHE PATENTSCHRIFT

(11) **EP 0 749 171 B1**
(45) Veröffentlichungstag und Bekanntmachung des Hinweises auf die Patenterteilung: **21.04.1999**
(21) Anmeldenummer: 95810390.5
(22) Anmeldetag: 13.06.1995
(51) Int. Cl.: H01M 8/02, H01M 8/24

(54) **Hochtemperatur-Brennstoffzelle**
High-temperature fuel cell
Pile à combustible fonctionnant à haute température

(43) Veröffentlichungstag der Anmeldung: 18.12.1996
(73) Patentinhaber: Sulzer Hexis AG, 8400 Winterthur (CH)
(72) Erfinder: Batawi, Emad, Dr., CH-8409 Winterthur (CH)
(74) Vertreter: Heubeck, Bernhard

(56) Entgegenhaltungen:
- EP-A- 0 437 175
- EP-A- 0 490 808

## Beschreibung

Die Erfindung betrifft eine Hochtemperatur-Brennstoffzelle gemäss Oberbegriff von Anspruch 1. Eine derartige Brennstoffzelle ist aus der EP-A 0 490 808 (= P.6399) bekannt.

Aus einem Brennstoffgas, kurz Gas genannt, und Luft-Sauerstoff wird mit einer elektrochemisch aktiven Platte, die einerseits aus einem schichtförmigen oxidionenleitenden Feststoffelektrolyten und andererseits aus zwei beidseitig auf der Elektrolytschicht aufgebrachten Elektrodenschichten besteht, elektrische Energie erzeugt. Bei der bekannten zentralsymmetrischen Brennstoffzelle wird das Gas zentral zugeführt und gelangt in einen Gaselektrodenraum; die Luft wird an der Peripherie eingespeist, wird zuerst in einem scheibenförmigen Wärmetauscher auf die für die Reaktion nötige Temperatur aufgeheizt und gelangt dann in den Luftelektrodenraum. Der Wärmetauscher bildet eine Trennwand zwischen dem Luftelektrodenraum einer Zelle A und dem Gaselektrodenraum einer benachbarten Zelle B. Der Wärmetauscher ist metallisch und bildet über eine Vielzahl von Kontaktelementen eine elektrische Verbindung zwischen der Luftelektrode der Zelle A und der Gaselektrode der Zelle B. Dieser scheibenförmige Wärmetauscher einschliesslich der Kontaktelemente wird kurz Interkonnektor genannt.

Eine Ausführungsform der bekannten Brennstoffzelle (siehe Figuren 3 und 5 in EP-A 0 490 808) umfasst einen Wärmetauscher, der aus zwei Metallblechen besteht. Das eine Metallblech ist reliefartig strukturiert und über eine Vielzahl regelmässig angeordneter Kontaktstellen mit dem anderen, im wesentlichen ebenen Metallblech verbunden. Die elektrischen Kontakte zu den Elektrodenschichten werden durch Drähte hergestellt, die gruppenweise am Wärmetauscher gebündelt sind.

Das für die Bleche des Wärmetauschers vorgesehene Material, eine Nickelbasislegierung, hat eine andere Wärmeausdehnung als die elektrochemisch aktive Platte. Wegen dieser nachteiligen Eigenschaft ergeben sich bei den hohen Betriebstemperaturen mechanische Spannungen in den Drähten der Kontaktelemente. Damit sich diese Spannungen nicht schädlich auswirken, müssen die einzelnen Drähte relativ lang - verglichen mit deren Durchmesser - ausgebildet sein; dies hat einen grossen Raumbedarf zur Folge. Es ergeben sich auch hohe Kosten, da die Herstellung dieses bekannten Interkonnektors sehr aufwendig ist.

Aufgabe der Erfindung ist es daher, eine Brennstoffzelle mit einem Interkonnektor zu schaffen, die ein kleineres Volumen beansprucht und die kostengünstiger herstellbar ist. Diese Aufgabe wird durch die Merkmale des Anspruchs 1 gelöst.

Der Wärmetauscher ist erfindungsgemäss dreilagig ausgebildet, bestehend aus zwei reliefartig strukturierten Metallblechen, die auf einer gemeinsamen mittleren Platte befestigt sind. Die Strukturierung kann aus einer hexagonaler Anordnung von Erhebungen und Vertiefungen bestehen, wie sie in der Fig.5 der EP-A 0 490 808 dargestellt ist. Die mittlere Platte ist wesentlich dicker als die beiden Metallbleche und die Metallbleche üben dank ihrer Strukturierung einen relativ kleinen Widerstand aus gegen elastische Verformungen parallel zu den Lagen des Wärmetauschers. Daher bestimmt die mittlere Platte im wesentlichen die Wärmeausdehung dieser dreilagigen Struktur. Weil diese Wärmeausdehung erfindungsgemäss zumindest angenähert die gleiche Wärmeausdehnung wie die elektrochemisch aktive Platte aufweist, gilt dies auch für den als Interkonnektor ausgebildeten Wärmetauscher. Die Strukturierung der Metallbleche ist derart vorgesehen, dass ohne Zwischenschaltung von Kontaktelementen ein direkter Kontakt zwischen elektrochemisch aktiven Platten benachbarter Zellen herstellbar ist. Dank gleicher Wärmeausdehnung entstehen an den Kontaktstellen zwischen dem Interkonnektor und den elektrochemisch aktiven Platten keine schädlichen Spannungen beim Aufheizen der Brennstoffzellen auf die Betriebstemperatur.

Die abhängigen Ansprüche 2 bis 10 beziehen sich auf vorteilhafte Ausführungsformen der erfindungsgemässen Brennstoffzelle. Gegenstand des unabhängigen Anspruchs 11 ist eine Batterie mit erfindungsgemässen Brennstoffzellen.

Nachfolgend wird die Erfindung anhand der Zeichnungen erläutert. Es zeigen:
- Fig. 1: einen Ausschnitt eines erfindungsgemässen Interkonnektors, wobei nur ein Teil eines der beiden Metallbleche und ein Teil der mittleren Platte dargestellt sind,
- Fig. 2: ausschnittsweise eine mittlere Platte in Draufsicht,
- Fig. 3: ausschnittsweise ein schachbrettartig strukturiertes Metallblech,
- Fig. 4: ein hexagonal strukturiertes Metallblech,
- Fig. 5: einen Querschnitt durch den dreilagigen Interkonnektor,
- Fig. 6: ein Schrägbild eines Metallblechausschnitts mit spiralförmigen Erhebungen,
- Fig. 7: eine mäandrische Kanalstruktur für das Metallblech,
- Fig. 8: ein Detail zur Struktur aus Fig.7 und
- Fig. 9: einen Querschnitt durch zwei benachbarte Zellen einer Brennstoffzellen-Batterie.

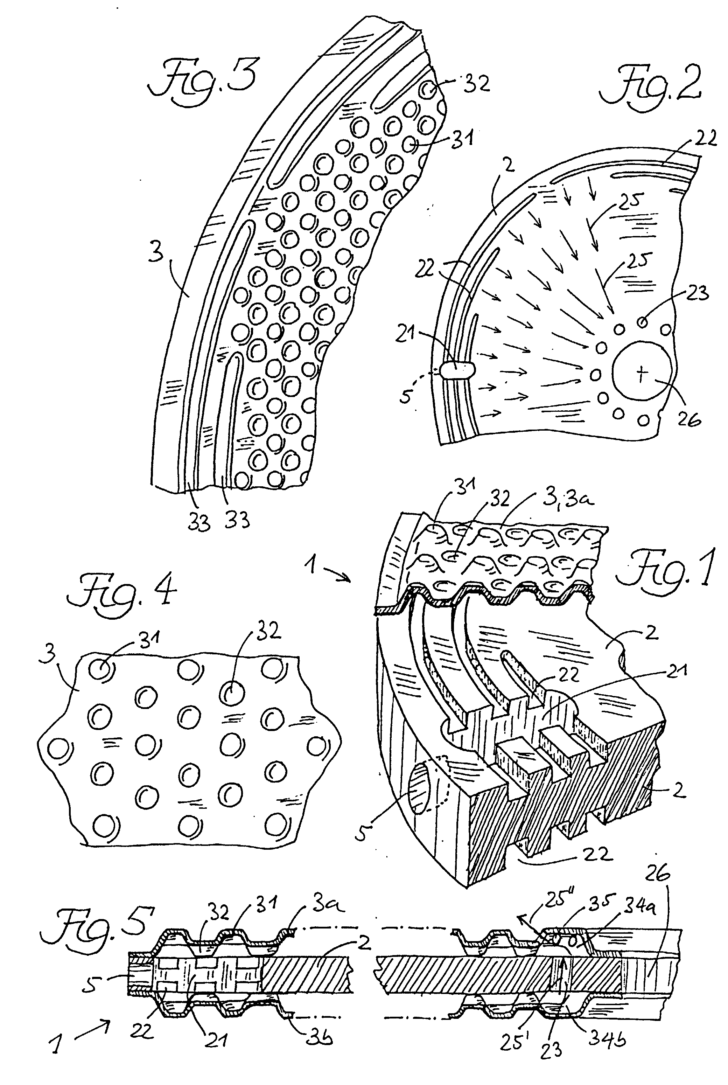

Der Interkonnektor 1 in Fig.1 setzt sich aus der mittleren Platte 2 und zwei reliefartig strukturierten Metallblechen 3 zusammen, wobei nur eines der Metallbleche 3 (3a oder 3b) gezeigt ist. Die Strukturierung besteht aus schachbrettartig angeordneten Erhebungen 31 und Vertiefungen 32. In der mittleren Platte 2 ist - siehe auch Fig.2 - mindestens eine Lufteinspeisestelle 5 vorgesehen. Die Luft gelangt zuerst in eine Kammer 21, die durch einen Durchbruch der Platte 2 gegeben ist. Ausgehend von dieser Kammer 21 wird die Luft über Nuten 22 entlang der Peripherie des Interkonnektors verteilt. In Fig.2 stellen die Pfeile 25 die Luftströmung dar. Die Luft strömt auf beiden Seiten der Platte 2.

Die Luft passiert den Wärmetauscher somit in zwei Teilströmen und kommt dabei mit einer wärmezuführenden Oberfläche in Kontakt, die durch die Platte 2 und die Metallbleche 3a sowie 3b gebildet wird. Diese wärmezuführende Oberfläche ist im wesentlichen doppelt so gross wie die entsprechende Kontaktfläche der bekannten Brennstoffzelle (EP-A 0 490 808). Es ergibt sich daher ein entsprechend verbesserter Wärmeübergang.

Im zentralen Bereich kann die Luft durch Bohrungen 23 von der einen Seite auf die andere wechseln (Pfeil 25'). Der zentrale Durchbruch 26 ermöglicht die Anordnung einer zentralen Gaseinspeisung (vgl. Fig.9).

Statt über Nuten 22 in der mittleren Platte 2 kann die Luft beispielsweise auch über Kanäle verteilt werden, die durch Erhebungen 33 im Metallblech 3 gebildet sind: siehe Fig.3.

Neben den kanalartigen Erhebungen 33 weist das Metallblech 3 schachbrettartig angeordnete Erhebungen 31 und Vertiefungen 32 auf (vgl. Fig.1). In Fig.4 ist eine hexagonale Anordnung zu sehen, bei der doppelt so viele Vertiefungen 32 wie Erhebungen 31 vorliegen. Die inverse Situation (Vertauschung der Vertiefungen und Erhebungen) oder auch andere Verteilungen sind selbstverständlich auch möglich.

Der Querschnitt der Fig.5 liegt in einer Ebene, die in Fig.1 in radialer Richtung durch die Lufteinspeisestelle 5 und die Kammer 21 verläuft. In Fig.5 ist auch das strukturierte Metallblech 3b der Unterseite zu sehen. Die beiden Metallbleche 3a, 3b der seitlichen Lagen sind im wesentlichen gleich ausgebildet. Im zentralen Bereich beim Durchbruch 26 sind in den Metallblechen 3a und 3b jeweils ein ringförmiger Luftsammelkanal 34a bzw. 34b angeordnet. Der Luftsammelkanal 34a des oberen Blechs 3a weist Luftaustrittstellen 35 auf, durch die die vorgewärmte Luft - Pfeil 25'' - in den Luftelektrodenraum 41 (siehe Fig.9) einströmen kann. Der Pfeil 25' gibt den Strom der Luft an, die an der Unterseite vorgewärmt worden ist und die durch die Bohrung 23 zur Oberseite gelangt.

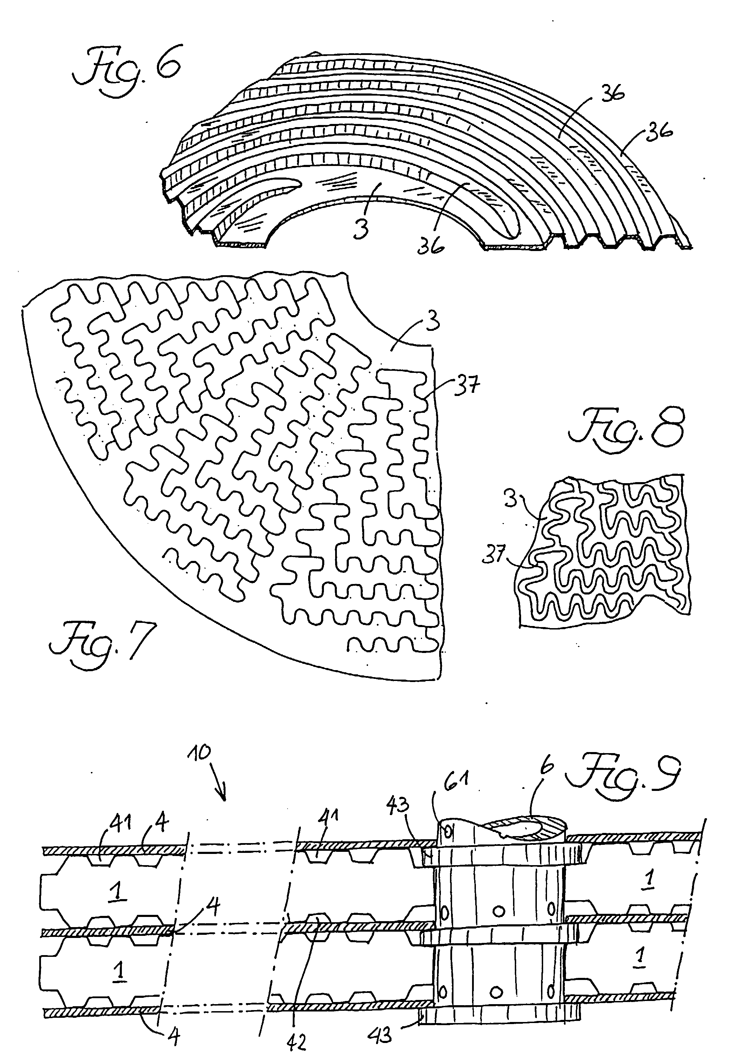

Statt einer Strukturierung der Metallbleche 3 mit Erhebungen und Vertiefungen kann auch eine Strukturierung mit kanalartigen Erhebungen vorgesehen sein. In Fig.6 sind derartige Erhebungen 36 dargestellt, die eine spiralförmige Anordnung bilden. In Fig.7 ist ein mäandrische Verlauf von kanalartigen Erhebungen 37 gezeigt. Fig.8 stellt einen vergösserten Ausschnitt dieser mäandrischen Kanalanordnung dar.

Es sind feste Verbindungen zwischen den Metallblechen 3a, 3b - insbesondere an den Kontaktstellen der Vertiefungen 32 - und der mittleren Platte 2 vorgesehen. Diese Verbindungen können durch Löten oder Schweissen hergestellt werden.

Fig.9 zeigt die alternierende Anordnung von Interkonnektoren 1 und elektrochemisch aktiven Platten 4 einer Brennstoffzellenbatterie, die einen Stapel 10 von Brennstoffzellen umfasst. Die Interkonnektoren 1, die detailliert in Fig.5 zu sehen sind, sind in Fig.9 nur mit ihren Umrisslinien dargestellt. Die elektrochemisch aktiven Platten 4, die aus zwei Elektroden- und einer Elekrolytschicht aufgebaut ist, ist auch vereinfacht dargestellt, nämlich ohne den dreilagigen Aufbau. Die Luftelektroden befinden sich an den Unterseiten der Platten 4. Zwischen den Interkonnektoren 1 und den Luftelektroden liegt jeweils ein Luftelektrodenraum 41. Über ein zentrales Rohr 6 und die Einspeisestellen 61 wird das Gas in Gaselektrodenräume 42 zugeführt. Ringförmige Dichungen 43 verhindern eine Vermischung von Gas und Luft innerhalb des Zellenstapels 10.

Es sind im Handel Platten erhältlich, die aus einer metallischen Legierung bestehen, die die gleiche Wärmeausdehnung wie die elektrochemisch aktive Platte aufweist. Diese Platten können als mittlere Platte des erfindungsgemässen Interkonnektors verwendet werden. Da die Platten relativ teuer sind, ist es nicht wirtschaftlich, die Interkonnektoren ausschliesslich mit ihnen herzustellen.

Als Material für die mittleren Platten kommt auch ein Verbundwerkstoff in Frage. Dieser Verbundwerkstoff kann beispielsweise aus einem porösen keramischen Körper bestehen, dessen Poren mit einer metallischen Legierung gefüllt sind.

Die mittleren Platten können auch vollständig aus einem keramischen Material bestehen. Die nötige elektrische Verbindung zwischen den beiden seitlichen Metallblechen kann am Plattenrand hergestellt werden. Eine andere Möglichkeit besteht darin, über Durchbrüche in der Platte, die mit einer metallischen Phase gefüllt sind, die elektrische Verbindung herzustellen.

## Patentansprüche

1. Hochtemperatur-Brennstoffzelle, die einen planaren, im wesentlichen zentralsymmetrischen Aufbau aufweist und eine elektrochemisch aktive Platte (4) sowie einen als Luftwärmetauscher ausgebildeten Interkonnektor (1) umfasst, wobei Lufteinspeisestellen (5) an der Peripherie angeordnet sind,
dadurch gekennzeichnet, dass der Interkonnektor dreilagig aufgebaut ist, dass die mittlere Lage aus einer Platte (2) besteht, die eine zumindest angenähert gleiche Wärmeausdehnung wie die elektrochemisch aktive Platte (4) aufweist, dass die seitlichen Lagen (3a, 3b) aus Metallblechen (3) gebildet sind, die wesentlich dünner als die Platte der mittleren Lage sind, dass die Metallbleche reliefartig strukturiert über eine Vielzahl von Kontaktstellen (32) mit der mittleren Platte fest verbunden sind, und dass die seitlichen Metallbleche derart ausgebildet sind, dass direkte Kontakte mit der elektrochemisch aktiven Platte sowie der entsprechenden Platte einer benachbarten Zelle vorliegen.

2. Brennstoffzelle nach Anspruch 1, dadurch gekennzeichnet, dass die mittlere Platte (2) zumindest teilweise aus einem Metall oder einer metallischen Legierung besteht.

3. Brennstoffzelle nach Anspruch 1 oder 2, dadurch gekennzeichnet, dass die mittlere Platte (2) zumindest teilweise aus einem keramischen Material besteht.

4. Brennstoffzelle nach einem der Ansprüche 1 bis 3, dadurch gekennzeichnet, dass die mittlere Platte (2) aus einem Verbundwerkstoff besteht.

5. Brennstoffzelle nach einem der Ansprüche 1 bis 4, dadurch gekennzeichnet, dass beide Metallbleche (3) der seitlichen Lagen (3a, 3b) im wesentlichen gleich ausgebildet sind, wobei für die luftseitige Lage zusätzlich zentral angeordnete Luftaustrittsstellen (35) vorgesehen sind.

6. Brennstoffzelle nach einem der Ansprüche 1 bis 5, dadurch gekennzeichnet, dass mindestens eines der Metallbleche (3) mit einer regelmässigen Anordnung, insbesondere einer schachbrettartigen oder einer hexagonalen Anordnung von Erhebungen (31) und Vertiefungen (32) strukturiert ist.

7. Brennstoffzelle nach einem der Ansprüche 1 bis 5, dadurch gekennzeichnet, dass mindestens eines der Metallbleche (3) kanalartige Erhebungen (33, 36, 37) aufweist.

8. Brennstoffzelle nach Anspruch 7, dadurch gekennzeichnet, dass durch die kanalartigen Erhebungen (36) eine spiralförmige Strukturierung gegeben ist.

9. Brennstoffzelle nach Anspruch 7, dadurch gekennzeichnet, dass die kanalartigen Erhebungen (37) zumindest zonenweise eine mäandrische Anordnung aufweisen.

10. Brennstoffzelle nach einem der Ansprüche 1 bis 9, dadurch gekennzeichnet, dass für eine Verteilung der in den Wärmetauscher eingespeisten Luft an der Peripherie kanalartige Erhebungen (33) in mindestens einem der seitlichen Metallbleche (3) und/oder Nuten (22) in der mittleren Platte (2) vorgesehen sind.

11. Brennstoffzellenbatterie mit stapelartig angeordneten Zellen gemäss einem der Ansprüche 1 bis 10.

## Claims

1. High temperature fuel cell having a planar substantially centrally symmetrical structure and an electrochemically active plate (4) as well as an interconnector (1) formed as an air heat exchanger, with air infeed positions (5) arranged at the periphery, characterized in that the interconnector is build up in three layers, in that the middle layer consists of a plate (2) which has at least approximately the same thermal expansion as the electrochemically active plate (4); in that the side layers (3a, 3b) are formed of metal sheets (3) which are substantially thinner than the plate of the middle layer; in that the metal sheets having a relief-like structure are fixedly connected to the middle plate via a plurality of contact positions (32) and in that the metal side sheets are formed in such a way that direct contacts are present with the electrochemically active plate and also with the corresponding plate of a neighbouring cell.

2. Fuel cell in accordance with claim 1, characterized in that the middle plate (2) consists at least partially of a metal or of a metallic alloy.

3. Fuel cell in accordance with claim 1 or claim 2, characterized in that the middle plate (2) consists at least partly of a ceramic material.

4. Fuel cell in accordance with one of the claims 1 to 3, characterized in that the middle plate (2) consists of a composite material.

5. Fuel cell in accordance with one of the claims 1 to 4, characterized in that the two metal sheets (3) of the side layers (3a, 3b) are of substantially the same design, with centrally arranged air outlet positions (35) being additionally provided for the air side layer.

6. Fuel cell in accordance with one of the claims 1 to 5, characterized in that at least one of the metal sheets (3) is structured with a regular arrangement, in particular a chessboard-like or hexagonal arrangement of raised portions (31) and depressions (32).

7. Fuel cell in accordance with one of the claims 1 to 5, characterized in that at least one of the metal sheets (3) has channel-like raised portions (33, 36, 37).

8. Fuel cell in accordance with claim 7, characterized in that a spiral-like structuring results through the channel-like raised portions (36).

9. Fuel cell in accordance with claim 7, characterized in that the channel-like raised portions (37) have a meandering arrangement, at least zone-wise.

10. Fuel cell in accordance with one of the claims 1 to 9, characterized in that channel-like raised portions (33) are provided in at least one of the side metal sheets (3) and/or grooves (22) are provided in the middle plate (2) for a distribution of the air fed into the heat exchanger at the periphery.

11. Fuel cell battery with cells in accordance with one of the claims 1 to 10 arranged in a stack-like manner.

## Revendications

1. Pile à combustible fonctionnant à haute température, qui a une construction plane, essentiellement symétrique au centre et qui comprend une plaque active électro-chimiquement (4) ainsi qu'un interconnecteur (1) réalisé comme échangeur de chaleur d'air, où des emplacements d'introduction d'air (5) sont disposés à la périphérie, caractérisée en ce que l'interconnecteur est réalisé en trois couches, en ce que la couche centrale est constituée d'une plaque (2) qui présente une dilatation thermique au moins approximativement égale à celle de la plaque active électro-chimiquement (4), en ce que les couches latérales (3a, 3b) sont formées par des tôles métalliques (3) qui sont nettement plus minces que la plaque de la couche centrale, en ce que les tôles métalliques d'une structure en relief sont reliées solidement par un grand nombre d'emplacements de contact (32) à la plaque centrale et en ce que les tôles métalliques latérales sont réalisées de façon qu'il y ait des contacts directs avec la plaque active électro-chimiquement et avec la plaque correspondante d'une pile avoisinante.

2. Pile à combustible selon la revendication 1, caractérisée en ce que la plaque centrale (2) est constituée au moins partiellement d'un métal ou d'un alliage métallique.

3. Pile à combustible selon la revendication 1 ou 2, caractérisée en ce que la plaque centrale (2) est constituée au moins partiellement d'une matière céramique.

4. Pile à combustible selon l'une des revendications 1 à 3, caractérisée en ce que la plaque centrale (2) est constituée d'un matériau composite.

5. Pile à combustible selon l'une des revendications 1 à 4, caractérisée en ce que les deux tôles métalliques (3) des couches latérales (3a, 3b) sont réalisées essentiellement d'une manière identique, où sont prévues pour la couche côté air en plus des emplacements de sortie d'air disposés au centre (35).

6. Pile à combustible selon l'une des revendications 1 à 5, caractérisée en ce qu'au moins l'une des tôles métalliques (3) est structurée avec un agencement régulier, notamment un agencement en échiquier ou hexagonal de surélévations (31) et de creux (32).

7. Pile à combustible selon l'une des revendications 1 à 5, caractérisée en ce qu'au moins l'une des tôles métalliques (3) présente des surélévations en forme de canal (33, 36, 37).

8. Pile à combustible selon la revendication 7, caractérisée en ce qu'il est obtenu par les surélévations en forme de canal (36) une structure en forme de spirale.

9. Pile à combustible selon la revendication 7, caractérisée en ce que les surélévations en forme de canal (37) présentent, au moins par zones, un agencement en méandre.

10. Pile à combustible selon l'une des revendications 1 à 9, caractérisée en ce que sont prévues pour une répartition de l'air introduite dans l'échangeur de chaleur, à la périphérie, des surélévations en forme de canal (33) dans au moins l'une des tôles métallique latérales (3) et/ou des rainures (22) dans la plaque centrale (2).

11. Batterie à piles à combustible avec des cellules disposées en forme de pile selon l'une des revendications 1 à 10.
